# FASCICULE DE BREVET EUROPEEN

(11) **EP 1 193 946 B1**
(45) Date de publication et mention de la délivrance du brevet: **16.09.2009**
(21) Numéro de dépôt: 01402024.2
(22) Date de dépôt: 26.07.2001
(51) Int. Cl.: H04L 29/06

(54) **Procéde et réseau de communication**
Kmmunikationsverfahren und -netzwerk
Method of communication and communication network

(30) Priorité: 31.07.2000 FR 0010087
(43) Date de publication de la demande: 03.04.2002
(73) Titulaire: Alcatel Lucent, 75008 Paris (FR)
(72) Inventeur: Marce, Olivier, 91300 Massy (FR)
(74) Mandataire: Chaffraix, Sylvain

(56) Documents cités:
- EP-A- 0 812 089
- WO-A-00/11850
- US-A- 5 504 837
- US-A- 5 867 498

## Description

La présente invention concerne le domaine des télécommunications, plus particulièrement les communications élaborées associées à la fourniture de services, et a pour objet un procédé de mise en communication en accord avec des caractéristiques et/ou des sources prédéfinies et un réseau pour la mise en oeuvre de ce procédé.

Le but de la présente invention est de fournir aux utilisateurs des communications présentant des propriétés optimales, en fonction des ressources disponibles et des souhaits ou préférences de l'utilisateur concerné.

Il existe déjà des solutions pour établir une communication comportant une adaptation dynamique de certaines de ses propriétés. Tel est notamment le cas avec les protocoles connus sous les désignations H323 et SIP qui comprennent la description (H245, SDP) du support de transmission requis afin de permettre aux parties concernées de faire part de leur accord.

D'autres solutions connues permettent d'aboutir à un accord en ce qui concerne certaines propriétés de la couche de transport du lien de communication, tel que par exemple la qualité du service ou de la transmission.

Ces solutions existantes proposent d'impliquer les différentes parties dans le choix d'une unique propriété de la communication. Il en résulte que dans les solutions connues, les propriétés de la communication sont essentiellement conditionnées par les ressources disponibles et attribuées de manière rigide, sans négociation.

EP-A-0812089 décrit un procédé de gestion des connexions conforme au préambule de la revendication 1. Lorsque toutes les ressources nécessitées par la proposition spécifiée dans le message d'acceptation ne sont pas disponibles, la connexion ne peut pas être établie.

Il existe par conséquent un besoin pour une solution permettant d'adapter la communication à des requêtes multiples et de satisfaire des souhaits complexes en termes de services, ce afin de répondre au mieux aux préférences exprimées par les utilisateurs, de manière souple et rapide.

Pour satisfaire ce besoin, la présente invention propose un procédé de mise en communication selon la revendication 1.

L'invention a également pour objet un réseau de communication composé, selon la revendication 7.

L'idée à la base de la présente invention repose sur la proposition d'une méthode d'établissement de communication et d'une architecture cellulaire de réseau composite autorisant une négociation de toutes les ressources impliquées dans une négociation, en tenant compte à la fois de la disponibilité desdites ressources et des souhaits ou préférences de l'utilisateur.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est un schéma synoptique montrant l'établissement d'une communication impliquant les ressources de plusieurs domaines faisant partie du réseau composé selon l'invention, et,
la figure 2 est un schéma synoptique montrant l'établissement d'une communication à l'intérieur d'un domaine donné avec changement de terminal de communication.

La présente invention concerne un procédé de mise en communication en accord avec un ensemble prédéterminé de caractéristiques et/ou de services requis, par l'intermédiaire d'un réseau, éventuellement composite et multicomposants.

Conformément à l'invention, ledit réseau est divisé en plusieurs domaines D1 à DM, à chacun desquels est associé une unité négociatrice Ni, et la procédure d'établissement d'une communication consiste, tout d'abord à adresser à au moins une unité négociatrice Ni une requête de mise en communication et un ensemble de paramètres définissant les caractéristiques et/ou services associés à la communication à établir, et, à établir, le cas échéant, ladite communication après détermination des ressources Ri disponibles adaptées dans les différents domaines Di concernés et sélection des ressources Ri permettant de répondre du mieux possible audit ensemble de caractéristiques et/ou services.

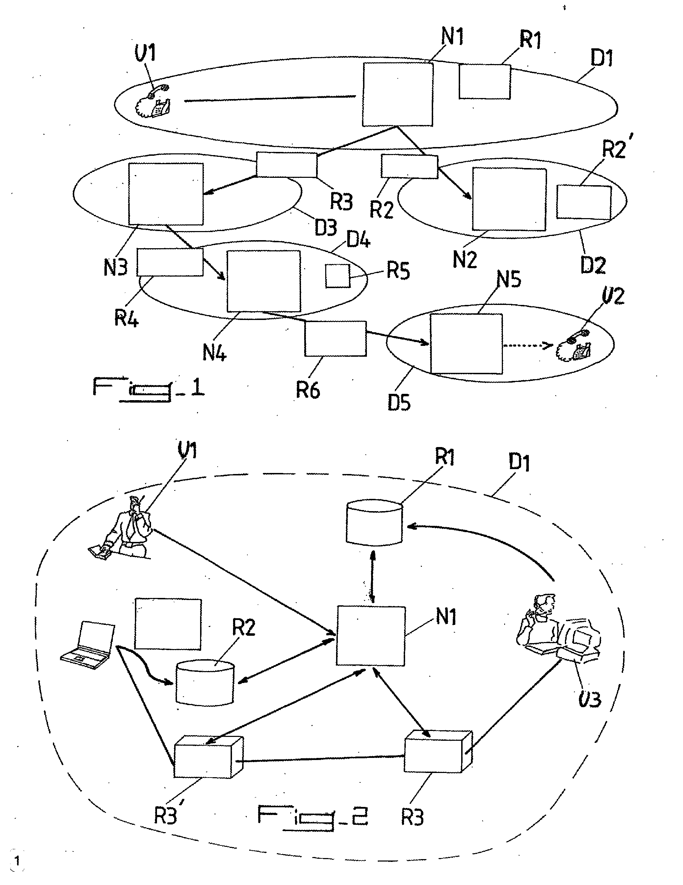

Comme le montrent à titre d'exemples illustratifs les figures 1 et 2 des dessins annexés, chaque unité négociatrice Ni est en relation, d'une part, avec les différentes ressources Ri et les différents prestataires de services du domaine Di considéré, connectés directement ou indirectement audit réseau ou faisant partie de ce dernier et, d'autre part, avec les unités négociatrices N1 à Ni - 1 et Ni + 1 à NM des autres domaines D1 à Di - 1 et Di + 1 à DM, chaque unité négociatrice Ni évaluant, sélectionnant et réservant, après accord, les ressources Ri et/ou prestataires disponibles dans le domaine Di qui lui est associé et permettant de contribuer de façon optimale à l'établissement de la communication envisagée.

Selon un mode de réalisation préférentiel de l'invention, le procédé de mise en communication pourra consister plus précisément :
- à transmettre à l'unité négociatrice Ni de chaque domaine Di situé le long de la ou d'une possible voie de transmission pour la communication à établir, ou dont au moins une ressource Ri est susceptible d'être impliquée dans ladite communication, ledit ensemble de caractéristiques et/ou services requis ;
- à déterminer, par l'intermédiaire desdites unités négociatrices Ni et dans chacun des domaines précités, les ressources Ri disponibles susceptibles de contribuer à l'établissement et à la réalisation de ladite communication en accord, total ou partiel, avec l'ensemble de caractéristiques et/ou services requis ;
- à collecter et à évaluer les informations fournies par les unités négociatrices Ni sollicitées, et,
- à établir la communication en fonction des résultats de ladite évaluation et après réservation des ressources Ri adaptées dans les domaines Di concernés.

L'ensemble de caractéristiques et/ou services requis pour la communication est fixé par l'utilisateur U1 qui est à l'initiative de cette dernière et la demande de mise en communication et les requêtes associées à celle-ci sont adressées à l'unité négociatrice Ni du domaine Di dans lequel l'utilisateur a émis la demande et les requêtes associées, qui les retransmet, après analyse, aux unités négociatrices Ni susceptibles d'être concernées.

Les demandes de l'utilisateur U1 pourront être transmises à l'unité négociatrice Ni directement ou par l'agent de transmission dudit utilisateur.

L'unité négociatrice Ni sollicitée par l'utilisateur U1 est en charge de la négociation et de la réservation des ressources Ri nécessaires à l'établissement de la communication avec l'utilisateur U2 demandé et les propriétés requises, notamment le support de communication et la nature et la qualité de la communication.

Ladite unité négociatrice Ni tentera de satisfaire la requête de l'utilisateur prioritairement avec les seules ressources du domaine Di qui lui est associé.

En l'absence de ressources adéquates dans le domaine Di qui lui est attribué, l'unité négociatrice Ni saisie par l'utilisateur s'adressera à des unités Ni d'autres domaines Di.

A titre d'exemples, les ressources Ri disponibles dans les différents domaines Di pourront être choisis dans le groupe formé par les ressources de réseau(x) de transmission (pour le transport des données entre les parties connectées), les ressources de calcul et de traitement de données, les ressources de connexion, les ressources de protocoles de communication, les ressources de restitution de données et d'informations, les ressources de bases de données ou ressources de stockages d'informations analogues, les ressources d'interfaçage et les autres ressources Ri dépendant de chacune des unités négociatrices Ni considérées.

Les ressources de calcul et de traitement comprendront notamment celles utilisées plus spécifiquement dans les communications, à savoir pour le contrôle d'appels, la traduction de standards ou de protocoles, l'encodage, le décodage ou le transcodage.

Les ressources de connexion et de restitution pourront comprendre les différentes interfaces de communication homme/machine, la formulation de la requête de mise en communication pouvant éventuellement être émise par une première interface et l'établissement de la communication être réalisée par le biais d'une seconde interface, différente de la première et identifiée dans le cadre de la requête initiale.

Les ressources de données pourront comprendre les bases de données d'informations générales ou spécialisées, les bases de données d'adresses ou de recherches d'adresses ou analogues, dont la disponibilité et le prix pourront être négociés avec le prestataire de services correspondant.

Les ressources de protocoles à utiliser comprenant notamment l'encodage en fonction du support de transmission ainsi que les protocoles de signalisation et de contrôle, pourront être définies entre les différents domaines et systèmes impliqués dans la communication.

Les caractéristiques des communications à établir pourront être choisies dans le groupe formé par le ou les destinataire(s) U2, la nature et la qualité de la communication, la durée de cette dernière, le moment d'établissement en cas de mise en communication différée, le coût maximum par unité de temps ou analogues.

Pour faciliter et accélérer les négociations, ainsi que permettre aux unités négociatrices Ni d'aboutir plus aisément à des compromis satisfaisant au mieux les souhaits de l'utilisateur, il peut être prévu de pondérer, en termes d'importance ou de préférence, les différents paramètres formant l'ensemble de caractéristiques et/ou de services requis.

L'unité négociatrice Ni chargée par l'utilisateur Ui de l'établissement de la communication sera normalement habilitée à réserver les moyens et services nécessaires pour répondre du mieux possible à la requête initiale et à choisir la solution se rapprochant le plus de ladite requête. Pour ce faire, lesdites unités négociatrices Ni comporteront des moyens d'aide à la décision ou analogues.

Pendant le déroulement des négociations en vue de l'établissement de la communication, l'unité négociatrice initiatrice pourra être sollicitée pour analyser et, le cas échéant, valider de multiples propositions formulées par des prestataires de services et des unités négociatrices d'autres domaines. Cette validation pourra, le cas échéant, également être de la responsabilité de l'agent agissant pour le compte de l'utilisateur ayant émis la demande.

Il peut également être prévu, en variante, qu'en cas d'absence de possibilité de satisfaction optimale des caractéristiques et/ou services demandés par l'utilisateur U1 ayant émis la requête de mise en communication, l'unité négociatrice Ni du domaine dans lequel ou par lequel ledit utilisateur U1 est connecté au réseau, soumette audit utilisateur, pour sélection et accord, une ou plusieurs possibilité(s) de mise en communication répondant de manière approchante à l'ensemble de caractéristiques et/ou services initialement requis, ce éventuellement avant réservation des ressources Ri concernées ou avant confirmation de ladite réservation auprès des unités négociatrices Ni, ressources Ri ou prestataires concernés.

Après achèvement des négociations, la communication peut être établie sur la base des ressources et des propriétés pour lesquelles les différentes parties ont donné leur accord.

La présente invention a également pour objet un réseau de communication composé, permettant la mise en communication, en accord avec un ensemble prédéfini de caractéristiques et/ou de services requis par un utilisateur U1 ou l'émetteur de la requête de mise en communication, caractérisé en ce que ledit réseau composé est formé de plusieurs domaines D1 à DM auxquels sont associés, pour chacun, une unité négociatrice Ni correspondante, cette dernière pouvant communiquer, d'une part, avec les différentes ressources Ri de communication et de services faisant partie ou reliées au domaine Di de l'unité Ni et, d'autre part, avec les unités négociatrices N1 à Ni - 1 et Ni + 1 à NM des autres domaines D1 à Di - 1 et Di + 1 à DM formant ledit réseau composé, lesdits domaines Di étant interconnectés entre eux par l'intermédiaire d'interfaces adaptées.

La mise en communication d'un utilisateur U1 pourra s'effectuer, par exemple, avec un ou plusieurs autres utilisateurs U2, U3 et/ou avec un ou plusieurs prestataires de services.

Selon un mode de réalisation avantageux de l'invention, chaque domaine Di constitue une entité structurellement et/ou logiquement unitaire, telle que par exemple un réseau homogène et les prestataires de services connectés à ce dernier, l'unité négociatrice Ni associée étant formée par le ou faisant partie du serveur, ou une unité informatique gestionnaire similaire, contrôlant ou pilotant ladite entité.

Préférentiellement, ledit réseau composé est constitué par le réseau Internet et met en oeuvre le procédé de mise en communication évoqué ci-dessus, sur toute requête d'un utilisateur U1 de l'un quelconque de ses domaines Di constitutifs, en vue de sa mise en communication avec le ou les destinataire(s) U2 souhaité(s) et/ou de la fourniture du ou des services demandé(s).

L'invention inclut également un terminal de communication, mobile ou non, faisant partie du réseau précité et adapté pour la mise en oeuvre du procédé décrit précédemment.

L'invention va à présent être décrite plus précisément en relation avec deux variantes d'applications pratiques, illustrées par les figures 1 et 2 des dessins annexés.

La figure 1 représente un schéma de négociations de ressources et d'établissement d'une communication, dans le cas où l'utilisateur U1 désire établir une communication avec l'utilisateur U2.

Tout d'abord l'utilisateur U1 envoie à l'unité négociatrice N1 de son domaine D1 une requête de mise en communication, ensemble avec les paramètres désirés.

L'unité négociatrice N1 essaie de satisfaire la demande de l'utilisateur et se met en contact avec une ressource de données R1 qui se trouve dans le même domaine et avec laquelle il passe un contrat.

Les ressources de calcul, de présentation et de protocole ne font pas l'objet de négociations puisqu'elles ont été fixées par l'utilisateur et qu'elles sont satisfaites. Dans le cas présent, l'utilisateur souhaite utiliser, comme interface de communication, l'appareil avec lequel il a initié la communication ainsi que le protocole supporté par ce dernier et les ressources de calcul fournies par celui-ci.

L'unité négociatrice N1 étant dans l'impossibilité de satisfaire les requêtes concernant les ressources de réseau et de transmission (l'appelé U2 étant situé dans un autre domaine), ainsi que celle concernant les ressources de services, il transmet les requêtes de l'utilisateur concernant ces points aux autres unités négociatrices Ni qui sont en contact avec lui.

L'unité négociatrice N2 ayant accès à un prestataire de services R2' pouvant fournir le service requis, l'unité négociatrice N1 opère une réservation de R2' par l'intermédiaire de N2.

Concernant les ressources de réseau, la réservation adéquate est réalisée par l'intermédiaire des unités négociatrices N3, N4 et N5, chacune d'elles utilisant les ressources de réseau de leurs domaines respectifs, ainsi qu'éventuellement les ressources d'interfaces adéquats R4 et R6.

Dans la procédure représentée, l'unité négociatrice N1 n'a pas réservé les ressources de services R5, équivalentes aux ressources de services R2' et proposées par l'unité négociatrice N4, l'offre transmise par l'unité négociatrice N2 ayant été jugée plus favorable (également réservation des ressources d'interfaces R2).

Après accord entre les différentes parties, la communication est établie avec les ressources réservées.

La figure 2 des dessins annexés illustre l'établissement de la communication lorsque l'utilisateur U1 appelle l'utilisateur U3 qui est situé dans le même domaine D1 que U1, ensemble avec les différentes ressources requises.

La requête de mise en communication, comprenant également les préférences exprimées par l'utilisateur U1, est adressée à l'unité négociatrice N1.

Tout d'abord, ladite unité négociatrice consulte un répertoire R1 pour déterminer de quelle manière l'utilisateur U3 peut être contacté. Ce répertoire a été mis à jour lors de la connexion de l'utilisateur U3 et peut, par conséquent, fournir les données nécessaires pour le contacter.

L'unité négociatrice peut ensuite négocier les ressources de transmission R3 et R3' nécessaires pour l'établissement de la communication souhaitée.

Simultanément, l'unité négociatrice peut informer le fournisseur de ressources de connexion, d'interfaçage et de restitution R2 que l'utilisateur U3 utilise un ordinateur multimédia et, sur la base de cette information, une recherche et une phase de négociation sont entamées, permettant la localisation et la connexion de l'ordinateur portable de l'utilisateur U1.

En accord avec les préférences exprimées par l'utilisateur U1 ainsi que les règles et la stratégie de négociation fixées par ce dernier, la communication est établie entre les ordinateurs des deux utilisateurs U1 et U3.

Grâce à l'invention, il est donc possible de proposer un procédé de mise en communication et une architecture de réseau permettant d'ajuster au mieux les propriétés de la communication avec les préférences émises par l'utilisateur. Ce dernier n'est plus obligé d'utiliser uniquement certaines ressources fixes qui lui sont attribuées, puisque tous les paramètres de la communication sont fixés de manière dynamique dans le cadre d'une négociation et d'un accord optimale entre les requêtes de l'utilisateur et les ressources disponibles.

Les unités négociatrices ainsi que les prestataires de services et de ressources consistent préférentiellement en des systèmes distribués et pourraient être basés sur la structure dite CORBA. Les requêtes, offres ou propositions échangées entre les différentes parties impliquées (utilisateurs, unités négociatrices, ressources, prestataires de services...) pourront être avantageusement formulées en utilisant le langage XML pour faciliter leur description et leur interprétation automatique par des unités informatiques.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Procédé de mise en communication en accord avec un ensemble prédéterminé de caractéristiques et/ou de services requis, par l'intermédiaire d'un réseau, éventuellement composite et multicomposants, consistant à :
diviser ledit réseau en plusieurs domaines (D1 à DM), chaque domaine comprenant une entité structurellement et/ou logiquement unitaire contrôlée ou pilotée par une unité informatique gestionnaire et incluant des ressources du réseau, ladite unité informatique gestionnaire incluant une unité négociatrice (Ni) associée audit domaine (Di),
adresser à au moins une unité négociatrice (N1) du domaine dans lequel ou par lequel un utilisateur (U1) est connecté au réseau une requête de mise en communication et un ensemble de paramètres définissant les caractéristiques et/ou services associés à la communication à établir et fixés par l'utilisateur (U1) qui est à l'initiative de ladite requête,
retransmettre, après analyse, à l'unité négociatrice (Ni) de chaque domaine (Di) situé le long de la ou d'une possible voie de transmission pour la communication à établir, ou dont au moins une ressource (Ri) est susceptible d'être impliquée dans ladite communication, ledit ensemble de paramètres définissant les caractéristiques et/ou services requis ;
**caractérisé en ce que** lesdites unités négociatrices (Ni) dans chacun des domaines précités déterminent les ressources (Ri) disponibles susceptibles de contribuer à l'établissement et à la réalisation de ladite communication en accord, total ou partiel, avec l'ensemble de caractéristiques et/ou services requis et transmettent des informations correspondantes ;
ladite unité négociatrice (N1) du domaine dans lequel ou par lequel l'utilisateur (U1) est connecté au réseau collecte et évalue les informations fournies par les unités négociatrices (Ni) sollicitées et, en cas d'absence de possibilité de satisfaction totale de l'ensemble de caractéristiques et/ou services requis, soumet audit utilisateur, pour sélection et accord, une ou plusieurs possibilités de mise en communication comportant à chaque fois un ensemble de caractéristiques et/ou services répondant de manière approchante à l'ensemble de caractéristiques et/ou services initialement requis, et établit, le cas échéant, ladite communication en fonction de l'accord de l'utilisateur après sélection et réservation des ressources (Ri) permettant de répondre audit ensemble de caractéristiques et/ou services correspondant.

2. Procédé selon la revendication 1, dans lequel chaque unité négociatrice (Ni) est en relation, d'une part, avec les différentes ressources (Ri) et les différents prestataires de services du domaine (Di) considéré, connectés directement ou indirectement audit réseau ou faisant partie de ce dernier et, d'autre part, avec les unités négociatrices (N1 à Ni - 1 et Ni + 1 à NM) des autres domaines (D1 à Di - 1 et Di + 1 à DM), chaque unité négociatrice (Ni) évaluant, sélectionnant et réservant, après accord, les ressources (Ri) et/ou prestataires disponibles dans le domaine (Di) qui lui est associé et permettant de contribuer de façon optimale à l'établissement de la communication envisagée.

3. Procédé selon l'une quelconque des revendications 1 à 2,
**caractérisé en ce que** les ressources (Ri) disponibles dans les différents domaines (Di) sont choisis dans le groupe formé par les ressources de réseau(x) de transmission, les ressources de calcul et de traitement de données, les ressources de connexion, les ressources de protocoles de communication, les ressources de restitution de données et d'informations, les ressources de bases de données ou ressources de stockages d'informations analogues, les ressources d'interfaçage et les autres ressources (Ri) dépendant de chacune des unités négociatrices (Ni) considérées.

4. Procédé selon l'une quelconque des revendications 1 à 3,
**caractérisé en ce que** les caractéristiques de la communication à établir sont choisies dans le groupe formé par le destinataire (U2), la nature et la qualité de la communication, la durée de cette dernière, le moment d'établissement en cas de mise en communication différée, le coût maximum par unité de temps ou analogues.

5. Procédé selon l'une quelconque des revendications 1 à 4,
**caractérisé en ce qu'**il consiste à pondérer, en termes d'importance ou de préférence, les différents paramètres formant l'ensemble de caractéristiques et/ou de services requis.

6. Réseau de communication composé, permettant la mise en communication, en accord avec un ensemble prédéfini de caractéristiques et/ou de services requis par l'émetteur de la requête de mise en communication, ledit réseau composé étant formé de plusieurs domaines (D1 à DM), chaque domaine comprenant une entité structurellement et/ou logiquement unitaire contrôlée ou pilotée par une unité informatique gestionnaire et incluant des ressources du réseau, ladite unité informatique gestionnaire incluant une unité négociatrice (Ni) correspondante, cette dernière pouvant communiquer, d'une part, avec les différentes ressources (Ri) de communication et de services faisant partie ou reliées au domaine (Di) de l'unité (Ni) et, d'autre part, avec les unités négociatrices (N1 à Ni - 1 et Ni + 1 à NM) des autres domaines (D1 à Di - 1 et Di + 1 à DM) formant ledit réseau composé, lesdits domaines (Di) étant interconnectés entre eux par l'intermédiaire d'interfaces adaptées
dans lequel une unité négociatrice (N1) du domaine dans lequel ou par lequel un utilisateur (U1) est connecté au réseau est apte à recevoir une requête de mise en communication et un ensemble de paramètres définissant les caractéristiques et/ou services associés à la communication à établir et fixés par l'utilisateur (U1) qui est à l'initiative de ladite requête, et à retransmettre, après analyse, à l'unité négociatrice (Ni) de chaque domaine (Di) situé le long de la ou d'une possible voie de transmission pour la communication à établir, ou dont au moins une ressource (Ri) est susceptible d'être impliquée dans ladite communication, ledit ensemble de paramètres définissant les caractéristiques et/ou services requis ;
**caractérisé en ce que** lesdites unités négociatrices (Ni) dans chacun des domaines précités sont aptes à déterminer les ressources (Ri) disponibles susceptibles de contribuer à l'établissement et à la réalisation de ladite communication en accord, total ou partiel, avec l'ensemble de caractéristiques et/ou services requis, et à transmettre des informations correspondantes ;
ladite unité négociatrice (N1) du domaine dans lequel ou par lequel l'utilisateur (U1) est connecté au réseau étant apte :
à collecter et évaluer les informations fournies par les unités négociatrices (Ni) sollicitées,
en cas d'absence de possibilité de satisfaction totale de l'ensemble de caractéristiques et/ou services requis, à soumettre audit utilisateur, pour sélection et accord, une ou plusieurs possibilités de mise en communication comportant à chaque fois un ensemble de caractéristiques et/ou services répondant de manière approchante à l'ensemble de caractéristiques et/ou services initialement requis,
et à établir, le cas échéant, ladite communication en fonction de l'accord de l'utilisateur après sélection et réservation des ressources (Ri) permettant de répondre audit ensemble de caractéristiques et/ou services correspondant.

7. Réseau, selon la revendication 6, **caractérisé en ce que** chaque domaine (Di) constitue un réseau homogène et les prestataires de services connectés à ce dernier.

8. Réseau selon l'une quelconque des revendications 6 et 7,
**caractérisé en ce qu'**il est constitué par le réseau Internet et **en ce qu'**il met en oeuvre le procédé selon l'une quelconque des revendications 1 à 6, sur toute requête d'un utilisateur (U1) de l'un quelconque de ses domaines (Di) constitutifs, en vue de sa mise en communication avec le ou les destinataire(s) (U2) souhaité(s) et/ou de la fourniture du ou des services demandé(s).

## Claims

1. A method for establishing communication in accordance with a predetermined set of requested characteristics and/or services, by means of a network, potentially a composite and multicomponent network, consisting of:
dividing said network into multiple domains (D1 to DM), each domain comprising a structurally and/or logically distinct entity controlled or operated by a managing processing unit and including some of the network's resources, said managing processing unit including a negotiating unit (Ni) associated with said domain (Di),
sending, to at least one negotiating unit (N1) of the domain in which or through which a user (U1) is connected to the network, a request to establish communication and a set of parameters defining the characteristics and/or services associated with the communication to be established and which are set by the user (U1) who initiated said request,
resending, after analysis, to the negotiating unit (Ni) of each domain (Di) located along the (or one possible) transmission channel for the communication to be established, or a domain
wherein at least one resource (Ri) may be involved in said communication, said set of parameters defining the requested characteristics and/or services;
**characterized in that** said negotiating units (Ni) in each of the aforementioned domains determine the resources (Ri) that are available which may contribute to the establishment and fulfillment of said communication, in full or partial accordance with the set of requested characteristics and/or services, and transmit corresponding information;
said negotiating unit (N1) of the domain in which or through which a user (U1) is connected to the network collects and evaluates the information provided by the requested negotiating units (Ni), and if there is no way to fully satisfy all of the requested characteristics and/or services, submits to said user, for selection and approval, one or more possibilities for establishing communication, each comprising a set of characteristics and or services that approximately satisfy the initially requested set of characteristics and or services, and, if appropriate, establishes said communication subject to the user's approval, after resources (Ri) suitable to satisfying the corresponding set of characteristics and/or services have been selected and reserved.

2. A method according to claim 1, wherein each negotiating unit (Ni) is in contact with the appropriate domain's (Di) various resources (Ri) and various service providers, which are directly or indirectly connected to said network or form a part thereof, and also with the negotiating units (N1 to Ni -1 and Ni +1 to NM) of the other domains (D1 to Di - 1 and Di + 1 to DM), each negotiating unit (Ni) evaluating, selecting, and reserving, after approval, the resources (Ri) and/or service providers available in the domain (Di) which is associated with it, enabling it to optimally contribute to the establishment of the intended communication.

3. A method according to one of claims 1 to 2, **characterized in that** the resources (Ri) available in the various domains (Di) are selected from the group formed by transmission network resources, computing and data processing resources, connection resources, communication protocol resources, information and data retrieval resources, database resources or similar information storage resources, interface resources, and other resources (Ri) dependent on each of the negotiating units (Ni) in question.

4. A method according to one of claims 1 to 3, **characterized in that** the communication characteristics to be established are selected from the group formed by the recipient (U2), the nature and quality of the communication, the duration thereof, the moment when communication is established if it is time-delayed, the maximum cost per unit of time, or similar characteristics.

5. A method according to one of claims 1 to 4, **characterized in that** it consists of weighting the various parameters forming the set of requested characteristics and or services by importance or preference.

6. A composite communication network making it possible to establish communication in accordance with a predefined set of characteristics and/or services requested by the sender of the communication establishment request, said composite network being formed of multiple domains (D1 to DM), each domain comprising a structurally and/or logically distinct entity controlled or operated by a managing processing unit and including some of the network's resources, said managing processing unit including a corresponding negotiating unit (Ni), said negotiating unit (Ni) having the ability to communicate with the various communication and service resources (Ri) that form part of or are connected to the unit's (Ni) domain (Di), and also with the negotiating units (N1 to Ni -1 and Ni +1 to NM) of the other domains (D1 to Di - 1 and Di + 1 to DM) forming said compound network, the domains (Di) being connected to one another by means of appropriate interfaces,
wherein one negotiating unit (N1) of the domain within which or by which a user (U1) is connected to the network, is capable of receiving a communication establishment request and a set of parameters defining characteristics and/or services associated with the communication to be established, as set by the user (U1) who initiated said requests, and after analysis, to the negotiating unit (Ni) of each domain (Di) located along the (or one possible) transmission channel for the communication to be established, or a domain
wherein at least one resource (Ri) may be involved in said communication, said set of parameters defining the requested characteristics and/or services;
**characterized in that** said negotiating units (Ni) in each of the aforementioned domains are capable of determining the available resources (Ri) and may contribute to the establishment and fulfillment of said communication, in full or partial accordance with the set of requested characteristics and/or services, and transmit corresponding information;
said negotiating unit (N1) of the domain within which or by which a user (U1) is connected to the network being capable:
of collecting and evaluating the information provided by the requested negotiating units (Ni).
of submitting to said user for selection and approval, if there is no way to fully satisfy all of the requested characteristics and/or services, one or more options for establishing communication, each comprising a set of characteristics and or services that approximately satisfy the initially requested set of characteristics and or services,
and, if appropriate, of establishing said communication subject to the user's approval, after resources (Ri) suitable to satisfying the corresponding set of characteristics and/or services have been selected and reserved.

7. A network according to claim 6, **characterized in that** each domain (Di) constitutes a homogeneous network and the service providers connected thereto.

8. a network according to one of claims 6 to 7, **characterized in that** it is constituted by the Internet network, and **in that** it implements the method according to one of claims 1 to 6 for any request by a user (U1) of any one of its component domains (Di) to establish communication between himself or herself and the desired recipients (U2) and/or to provide the requested service(s).

## Patentansprüche

1. Verfahren zum Herstellen einer Verbindung, unter Berücksichtigung eines vorgegebenen Satzes von geforderten Eigenschaften und/oder Diensten, über ein Netzwerk, möglicherweise ein zusammengesetztes oder Mehrkomponenten-Netzwerk, wobei das Verfahren darin besteht:
Das besagte Netzwerk in mehrere Bereiche (D1 bis DM) aufzugliedern, wobei jeder Bereich eine strukturell und/oder logisch einheitliche Einheit umfasst, welche von einer Verwaltungs-Rechnereinheit kontrolliert oder gesteuert wird und Ressourcen des Netzwerks einschließt,
wobei die besagte Verwaltungs-Rechnereinheit eine dem besagten Bereich (Di) zugeordnete Verhandlungseinheit (Ni) einschließt,
an mindestens eine Verhandlungseinheit (N1) des Bereichs, in welchem oder über welchen ein Benutzer (U1) an das Netzwerk angeschlossen ist, eine Verbindungsanforderung und einen Satz von Parametern, welche die der herzustellenden Verbindung zugeordneten Eigenschaften und/oder Dienste definieren und von dem Benutzer (U1), welcher die besagte Anforderung initiiert hat, festgelegt wurden, zu senden,
den besagten Satz von Parametern, welche die geforderten Eigenschaften und/oder Dienste nach Analyse an die Verhandlungseinheit (Ni) eines jeden sich entlang des oder eines möglichen Übertragungswegs für die herzuzustellende Verbindung befindlichen Bereichs (Di), oder in welchem mindestens eine Ressource (Ri) für den Einsatz in der besagten Verbindung ausgelegt ist, weiterzuleiten;
**dadurch gekennzeichnet, dass** die besagten Verhandlungseinheiten (Ni) in einem jeden der vorstehend genannten Bereiche die verfügbaren Ressourcen (Ri), welche geeignet sind, zur Herstellung und zur Durchführung der besagten Verbindung unter vollständiger oder teilweiser Berücksichtigung des Satzes von geforderten Eigenschaften und/oder Diensten beizutragen, bestimmen und entsprechende Informationen übertragen;
die besagte Verhandlungseinheit (N1) des Bereichs, in welchem oder über welchen der Benutzer (U1) an das Netzwerk angeschlossen ist, die von den in Anspruch genommenen Verhandlungseinheiten (Ni) bereitgestellten Informationen sammelt und bewertet, und, wenn keine Möglichkeit einer absoluten Erfüllung des Satzes von geforderten Eigenschaften und/oder Diensten besteht, dem Benutzer eine oder mehrere Möglichkeiten zur Herstellung einer Verbindung zur Auswahl und Genehmigung unterbreitet, welche jeweils einen Satz von Eigenschaften und/oder Diensten umfassen, die annähernd dem Satz der ursprünglich geforderten Eigenschaften und/oder Diensten entsprechen, und gegebenenfalls die besagte Verbindung entsprechend der Genehmigung des Benutzers nach der Auswahl und der Reservierung der Ressourcen (Ri), welche es ermöglichen, die Anforderungen des besagten entsprechenden Satzes von Eigenschaften und/oder Diensten zu erfüllen, herstellt.

2. Verfahren nach Anspruch 1, wobei jede Verhandlungseinheit (Ni) einerseits mit den verschiedenen Ressourcen (Ri) und den verschiedenen Diensteanbietern des betroffenen Bereichs (Di), welche direkt oder indirekt an das besagte Netzwerk angeschlossen oder Teil dieses Netzwerks sind, und andererseits mit den Verhandlungseinheiten (N1 bis Ni - 1 und Ni + 1 bis NM) der anderen Bereiche (D1 bis Di - 1 und Di + 1 bis DM) in Verbindung steht, wobei jede Verhandlungseinheit (Ni) nach Genehmigung die Ressourcen (Ri) und/oder Diensteanbieter, welche in dem Bereich (Di), welcher ihr zugeordnet ist und es ermöglicht, optimal zur Herstellung der geplanten Verbindung beizutragen, bewertet, auswählt und reserviert.

3. Verfahren nach einem beliebigen der Ansprüche 1 bis 2, **dadurch gekennzeichnet, dass** die in den verschiedenen Bereichen (Di) verfügbaren Ressourcen (Ri) in der Gruppe bestehend aus den Übertragungsnetz-Ressourcen, den Berechnungs- und Datenverarbeitungs-Ressourcen, den Verbindungsressourcen, den Kommunikationsprotokoll-Ressourcen, den Daten- und Informationswiederherstellungs-Ressourcen, den Datenbank-Ressourcen oder Ressourcen zur Speicherung von ähnlichen Informationen, den Schnittstellenressourcen und den anderen Ressourcen (Ri), welche von einer jeden der betroffenen Verhandlungseinheiten (Ni) abhängen, gewählt werden.

4. Verfahren nach einem beliebigen der Ansprüche 1 bis 3, **dadurch gekennzeichnet, dass** die Eigenschaften der herzustellenden Verbindung in der Gruppe bestehend aus dem empfangenden Benutzer (U2), der Natur und der Güte der Verbindung, der Dauer der Verbindung, dem Zeitpunkt der Herstellung der Verbindung im Fall einer zeitversetzten Herstellung der Verbindung, und den maximalen Kosten pro Zeiteinheit oder ähnliche gewählt werden.

5. Verfahren nach einem beliebigen der Ansprüche 1 bis 4, **dadurch gekennzeichnet, dass** es darin besteht, die verschiedenen Parameter, welche den Satz von geforderten Eigenschaften und/oder Diensten bilden, in Bezug auf die Relevanz oder Präferenz zu gewichten.

6. Zusammengesetztes Kommunikationsnetzwerk, welches das Herstellen einer Verbindung, unter Berücksichtigung eines vorgegebenen Satzes von von dem Absender der Verbindungsherstellungsanforderung geforderten Eigenschaften und/oder Diensten ermöglicht, wobei das zusammengesetzte Netzwerk aus mehreren Bereichen (D1 bis DM) besteht, wobei jeder Bereich eine strukturell und/oder logisch einheitliche Einheit umfasst, welche von einer Verwaltungs-Rechnereinheit kontrolliert oder gesteuert wird und Ressourcen des Netzwerks einschließt, wobei die besagte Verwaltungs-Rechnereinheit eine entsprechende Verhandlungseinheit (Ni) einschließt, welche einerseits mit den verschiedenen Verbindungs- und Dienstressourcen (Ri), welche dem Bereich (Di) der Einheit (Ni) angehören oder an diesen angeschlossen sind, und andererseits mit den Verhandlungseinheiten (N1 bis Ni - 1 und Ni + 1 bis NM) der anderen Bereichet (D1 bis Di - 1 und Di + 1 bis DM), welche das besagte zusammengesetzte Netzwerk bilden, kommunizieren kann, wobei die besagten Bereiche (Di) über geeignete Schnittstellen miteinander verbunden sind,
wobei eine Verhandlungseinheit (N1) des Bereichs, in welchem oder über welchen ein Benutzer (U1) an das Netzwerk angeschlossen ist, dazu ausgelegt ist, eine Verbindungsanforderung und einen Satz von Parametern, welche die der herzustellenden Verbindung zugeordneten Eigenschaften und/oder Dienste definieren und von dem Benutzer (U1), welcher die besagte Anforderung initiiert hat, festgelegt wurden, zu empfangen und den besagten Satz von Parametern, welche die geforderten Eigenschaften und/oder Dienste definieren, nach Analyse an die Verhandlungseinheit (Ni) eines jeden sich entlang des oder eines möglichen Übertragungswegs für die herzuzustellende Verbindung befindlichen Bereichs (Di), oder in welchem mindestens eine Ressource (Ri) für den Einsatz in der besagten Verbindung ausgelegt ist, weiterzuleiten;
**dadurch gekennzeichnet, dass** die besagten Verhandlungseinheiten (Ni) in einem jeden der vorstehend genannten Bereiche dafür ausgelegt sind, die verfügbaren Ressourcen (Ri), welche geeignet sind, zur Herstellung und zur Durchführung der besagten Verbindung unter vollständiger oder teilweiser Berücksichtigung des Satzes von geforderten Eigenschaften und/oder Diensten beizutragen, zu bestimmen und entsprechende Informationen zu übertragen;
die besagte Verhandlungseinheit (N1) des Bereichs, in welchem oder über welchen der Benutzer (U1) an das Netzwerk angeschlossen ist, dazu ausgelegt ist:
die von den in Anspruch genommenen Verhandlungseinheiten (Ni) bereitgestellten Informationen zu sammeln und zu bewerten,
wenn keine Möglichkeit einer absoluten Erfüllung des Satzes von geforderten Eigenschaften und/oder Diensten besteht, dem Benutzer eine oder mehrere Möglichkeiten zur Herstellung einer Verbindung zur Auswahl und Genehmigung zu unterbreiten, welche jeweils einen Satz von Eigenschaften und/oder Diensten umfassen, die annähernd den Anforderungen des Satzes der ursprünglich geforderten Eigenschaften und/oder Diensten entsprechen,
und gegebenenfalls die besagte Verbindung entsprechend der Genehmigung des Benutzers nach der Auswahl und der Reservierung der Ressourcen (Ri), welche es ermöglichen, die Anforderungen des besagten entsprechenden Satzes von Eigenschaften und/oder Diensten zu erfüllen, herzustellen.

7. Netzwerk nach Anspruch 6, **dadurch gekennzeichnet, dass** jeder Bereich (Di) aus einem homogenen Netzwerk und den an letzteres angeschlossenen Diensteanbietern besteht.

8. Netzwerk nach einem beliebigen der Ansprüche 6 und 7, **dadurch gekennzeichnet, dass** es aus dem Internet-Netzwerk besteht, und dass es für jede Anforderung eines Benutzers (U1) eines beliebigen seiner Bereiche (Di) zur Herstellung einer Verbindung mit dem oder den gewünschten Empfänger(n) (U2) und/oder zur Bereitstellung des oder der gewünschten Dienste(s) ein Verfahren gemäß einem beliebigen der Ansprüche 1 bis 6 anwendet.
